# EUROPÄISCHE PATENTSCHRIFT

(11) **EP 3 237 356 B1**
(45) Veröffentlichungstag und Bekanntmachung des Hinweises auf die Patenterteilung: **01.03.2023**
(21) Anmeldenummer: 15805133.4
(22) Anmeldetag: 30.11.2015
(51) Int. Cl.: C04B 35/043, C04B 35/053, C04B 35/632, C04B 35/66

(54) **VERWENDUNG FEUERFESTER ERZEUGNISSE**
USE OF REFRACTORY PRODUCTS
UTILISATION DE PRODUITS RÉFRACTAIRES

(30) Priorität: 22.12.2014 DE 102014019347
(43) Veröffentlichungstag der Anmeldung: 01.11.2017
(73) Patentinhaber: Refratechnik Holding GmbH, 80807 München (DE)
(72) Erfinder: JANSEN, Helge, 37133 Friedland (DE); SCHEMMEL, Thomas, 40688 Meerbusch (DE); STEIN, Volker, 37079 Göttingen (DE)
(74) Vertreter: Dr. Solf & Zapf Patent- und Rechtsanwalts PartG mbB
(86) Internationale Anmeldenummer: PCT/EP2015/078079
(87) Internationale Veröffentlichungsnummer: WO 2016/102149

(56) Entgegenhaltungen:
- EP-A1- 2 883 853
- EP-A2- 1 058 077
- WO-A1-86/05481
- WO-A1-2005/001359
- WO-A1-2008/107343
- WO-A1-2015/018813
- DE-A1-102006 031 700
- DE-A1-102013 008 855
- US-A- 5 250 479
- US-A- 5 262 367
- US-A1- 2007 161 496

## Beschreibung

Die Erfindung befasst sich mit feuerfesten Erzeugnisse, insbesondere nach DIN ISO/R 836, DIN 51060. Sie betrifft die Verwendung eines geformten oder ungeformten feuerfesten Auskleidungsprodukts, z. B. in Form eines geformten Steins, das aus einem trockenen, mineralischen Versatz bzw. Gemisch auf Basis mindestens eines Magnesiarohstoffes als grobkörnige Hauptkomponente hergestellt ist, zur Auskleidung von Buntmetallindustrieschmelzöfen, wobei das Auskleidungsprodukt bei Verwendung in Buntmetallindustrieschmelzöfen in hohem Maße widerstandsfähig ist gegen den Angriff von fayalitischen Schlacken (Eisensilikatschlacken), sulfidischen Schlacken (Matten) und Sulfaten und langfristig beständig gegen Buntmetallschmelzen, insbesondere gegen Kupferschmelze, ist. Die Erfindung betrifft beispielsweise die Verwendung der aus den Versätzen hergestellten ungeformten oder geformten feuerfesten Produkte im Bereich einer oxidierend betriebenen Ofenzone, vorzugsweise in der Schlackenschmelzzone eines Buntmetallindustrieschmelzofens.

Im Rahmen der Erfindung wird der Begriff "feuerfestes Erzeugnis" als Oberbegriff verwendet für einen feuerfesten Versatz und für feuerfeste Produkte, die z. B. unter Verwendung eines flüssigen Bindemittels und/oder Wasser aus einem Versatz z. B. durch Formen und/oder Pressen hergestellt werden.

Mit den Begriffen "Mehl" oder "Pulver" werden im Rahmen der Erfindung Körnungen bezeichnet, die übliche Kornverteilungen, z. B. Gaußsche Kornverteilungen aufweisen und deren Kornverteilung zu 95 Gew.-% ≤ 1,0 mm ist, insbesondere zu 95 Gew.-% unter 0,5 mm liegt, bestimmt z. B. als Siebdurchgangswert d₉₅.

Grobkörnig meint, dass die Granulatkörnung übliche Kornverteilung, z. B. Gaußsche Kornverteilung, mit 95 Gew.-% ≥ 1,0 mm aufweist, z. B. ebenfalls bestimmt als d₉₅-Wert.

Grobkörnige Komponente bzw. Hauptkomponente bedeutet, dass die grobe Körnung in einem aus einem Versatz hergestellten Produkt ein Stützgerüst mit sich gegenseitig abstützenden Körnern bilden kann.

Buntmetalle, auch Nichteisenmetalle genannt, wie Kupfer, Blei, Zink, Nickel oder dergleichen werden großtechnisch in verschiedenen Gefäßen z. B. aus sulfidischen Erzen erschmolzen (z. B. Pierce-Smith-Konvertern, QSL-Reaktoren oder Schachtöfen). Die Schmelzprozesse werden sowohl in reduzierend als auch oxidierend betriebenen Zonen bzw. unter reduzierenden als auch oxidierenden Schmelzabläufen in einem Buntmetallindustrieschmelzofen durchgeführt.

Die so genannte Laufzeit der Öfen hängt u. a. auch von der Art der feuerfesten Ausmauerung - auch Auskleidung genannt - ab, die zum einen den Metallmantel des Ofens vor der Einwirkung hoher Schmelzgut-, Flammen- und Atmosphärentemperaturen schützt und zum anderen Wärmeverluste herabsetzt.

Bei den sulfidischen Buntmetallerzen, z. B. den Kupfererzen, handelt es sich hauptsächlich um Verbindungen aus dem Metall, z. B. dem Kupfer, Eisen und Schwefel. Die Zusammensetzungen der Erze sind stark abhängig von der jeweiligen Lagerstätte.

Der bei diesen Erzen beginnende Prozess der Raffination startet mit einer Vorbehandlung und dem sich anschließenden Einschmelzen der Erze. Charakteristisch für diesen Prozess sind sulfidische Schmelzen mit hohen Eisengehalten sowie eine schwefelhaltige Atmosphäre.

Im nachfolgenden Schritt wird diese sulfidische Schmelze in eine Metalloxidschmelze, z. B. eine sulfidische Kupferschmelze in so genanntes Blisterkupfer konvertiert. Hierzu wird zunächst über einen Schlackenbildungsprozess der Eisenanteil in der anfänglich sulfidischen Schmelze (z. B. Cu-Fe-S) auf unter 1% abgesenkt. Dazu wird unter Zugabe von Quarzsand (SiO₂) das Eisen in einer entstehenden Fayalit-Schlacke (Fe₂SiO₄) gebunden und aus dem Prozess entfernt. Die verbleibende Schmelze auf Basis Me-S z. B. Cu-S (in der Regel Cu₂S), wird unter Einblasen von Luft in die Schmelze oxidiert, z. B. zum Blisterkupfer konvertiert. Wesentliche korrosive Medien in diesem Prozess sind neben der sulfidischen Schmelze (Me-Fe-S z. B. Cu-Fe-S mit sinkendem Fe-Gehalt im Zuge des Prozesses) die entstehende fayalitische Schlacke (Fe₂SiO₄), die hohe Konzentration von Schwefel in der Atmosphäre sowie die zum Ende des Prozesses entstehenden Anteile an Kupfer und Kupferoxid.

Im letzten Schritt der pyrometallurgischen Route wird die oxidierte Me-Schmelze zu reinem Metall, z. B. das Blisterkupfer zu Anodenkupfer, weiterverarbeitet. Hierbei wird die Schmelze weiter gereinigt unter Abtrennung des verbliebenen Schwefels und Eisens. Im Wesentlichen ist der Prozess durch flüssiges Metall z. B. Kupfer und die entstehenden Schlackenphasen auf Basis Me-Fe-O geprägt, welche die Korrosionsstoffe darstellen.

Daneben tritt in allen genannten Prozessen bedingt durch teilweise turbulente Strömungsbedingungen hoher erosiver Verschleiß auf.

Die Ofenausmauerung eines Buntmetallindustrieschmelzofens ist meist hohen Temperaturwechselbelastungen und hohen mechanischen und chemischen Beanspruchungen ausgesetzt. Die Temperaturwechselbelastungen resultieren aus der Chargenfahrweise sowie dem Einblasen kalter Prozessstoffe. Mechanische Beanspruchungen werden z. B. durch Drehbewegungen des Ofens bewirkt. Chemisch wird das Mauerwerk durch die Prozessschlacken und Metallschmelzen und durch volatile Verbindungen der Ofenatmosphäre beansprucht.

Die Schmelzöfen werden ausmauerungstechnisch eingeteilt in verschiedene Zonen, weil die Zonen im Betrieb unterschiedlich belastet werden.Z. B. beim QSL-Reaktor unterscheidet man den Reaktionsbereich, den Oxidationsbereich und die dazugehörigen Düsenzonen. Der Verschleiß des feuerfesten Materials ist hauptsächlich durch chemische Korrosion und durch Schlackenangriff und andere Prozessstoffe sowie Abplatzungen infiltrierter Schichten durch Temperaturwechselspannungen bedingt.

Während nach dem Stand der Technik in der Regel ein großer Anteil der Innenausmauerung eines Schmelzofens mit normalen MgO- oder MgO-Cr₂O₃-Steinen ausgekleidet wird, müssen die Schlackenzonen und vor allem die Düsenzonen mit sehr hochwertigen hochgebrannten, so genannten direktgebundenen, Magnesiachromsteinen verstärkt werden.

Solche feuerfesten Zustellungen finden sich in allen Typen von Nichteisen-Metall-Schmelzöfen unabhängig vom Design.

Naturgemäß weisen die bekannten gebrannten Feuerfest-Produkte eine offene Porosität auf, die etwa im Bereich zwischen 13 und 20 Vol.-% liegt. In diese offenen Poren können während des Prozesses Prozessstoffe wie Schlacken, Schmelzen oder Gase infiltrieren und durch chemische Reaktionen das Gefüge des Steins zersetzen und/oder zu vollkommen geänderten thermomechanischen Eigenschaften des Gefüges führen im Vergleich zu den ursprünglichen Eigenschaften des Feuerfestmaterials. Wechselnde chemische Angriffe sowie wechselnde thermische und thermomechanische Belastungen führen zu beschleunigtem Verschleiß und Gefügeschwächung, insbesondere nach Fremdstoffinfiltrationen und Korrosion der Feuerfest-Produktkomponenten bzw. der Steinkomponenten.

Fayalitische Schlacken entstehen bei der Herstellung von Buntmetallen aus den sulfidischen Erzen, z. B. bei der Herstellung von Kupfer aus Kupferkies (Cu-FeS₂). Kupferkies wird geröstet, woraus so genannter Kupferstein resultiert enthaltend Kupfersulfit (Cu₂S) und Eisenverbindungen, z. B. FeS und Fe₂O₃. Der Kupferstein wird zu Rohkupfer weiterverarbeitet, wobei glutflüssiger Kupferstein unter Luftzufuhr und Zusatz von SiO₂, z. B. in Form von Quarz, in einem Konverter behandelt wird. Dabei entsteht eine fayalitische Schlacke, die hauptsächlich das Mineral Fayalit (2FeO • SiO₂) enthält und Rohkupferoxid (Cu₂O).

Man kleidet - wie bereits erwähnt - derzeit die Konverter zur Herstellung von Rohkupfer, z. B. einen Pierce-Smith-Konverter, feuerseitig hauptsächlich mit gebrannten Magnesiachromitsteinen aus (z. B. DE 14 71 231 A1). Diese feuerfesten Erzeugnisse widerstehen aber dabei nur ungenügend dem Angriff von Sulfaten, die aus der Oxidation der Sulfide, z. B. in Form von Magnesiumsulfat, resultieren. Magnesiachromitsteine haben außerdem nur begrenzte bzw. ungenügende Hochtemperatur-Antiwetting-Eigenschaften für Buntmetallschmelzen, und sie weisen einen ungenügenden Penetrationswiderstand gegen heiße Buntmetallschmelzen auf.

Magnesiachromitsteine werden auch in Schmelzaggregaten für die Erzeugung der anderen Nichteisenmetalle bzw. Buntmetalle wie Ni, Pb, Sn, Zn eingesetzt und ergeben dort gleich gelagerte Probleme.

Aus der WO 2006/001359 A1 ist ein feuerfestes Mauerwerk eines Buntmetallindustrieschmelzofens bekannt, in dem in einer oxidierenden Zone des Ofens Nichteisenmetalle wie Kupfer, Blei, Zink, Nickel oder dergleichen bei Temperaturen über 700 °C erschmolzen werden, wobei das Mauerwerk ausgebildet ist aus ungebrannten Steinen aus feuerfestem Material wie MgO oder feuerfestem Material, bei dem MgO zumindest teilweise ausgetauscht ist gegen Spinell und/oder Korund und/oder Bauxit und/oder Andalusit und/oder Mullit und/oder Flintclay und/oder Schamotte und/oder Zirkonoxid und/oder Zirkonsilikat. Die Steine weisen zumindest im feuerseitigen bzw. heißseitigen Oberflächenbereich des Mauerwerks Kohlenstoff in Form von Graphit und eines aus kohlenstoffhaltigem Bindemittel entstandenen Koksgerüsts auf. Der Kohlenstoff soll im chemisch-physikalischen Milieu des in diesem Stand der Technik angegebenen feuerfesten Materials im Schlackenangriffsbereich die Schlackeninfiltration verringern infolge einer sich in situ einstellenden, dünnen, versiegelnden Infiltrationszone, wobei offenbar bei Zutritt von Sauerstoff aus den Gefügebestandteilen des Steins erste Reaktionsprodukte im Stein entstehen, die in situ Porenkanäle des Steins verstopfen, so dass zumindest der weitergehende Zutritt von Sauerstoff in das Gefüge der Steinkomponenten verringert und damit eine weitergehende Reaktion des Sauerstoffs mit Kohlenstoff vermieden wird.

Aus der DE 10 2012 015 026 A1 ist ein feuerfestes Erzeugnis nach ISO R/836, DIN 51060 für feuerfestes Mauerwerk in Buntmetallindustrieschmelzöfen bekannt in Form eines ungeformten oder geformten Versatzes z. B. in Form von geformten Steinen, wobei das feuerfeste Erzeugnis in situ in hohem Maße widerstandsfähig ist gegen den Angriff fayalitischer Schlacken (Eisensilikatschlacken) und Sulfaten und beständig gegen geschmolzene Buntmetalle, insbesondere gegen Kupferschmelze, sein soll. Erreicht wird eine gute Antiwetting-Eigenschaft gegen Buntmetallschmelzen, insbesondere gegen Kupferschmelze, ein verbesserter Penetrationswiderstand gegen fayalitische Schlacken und ein verbesserter Widerstand gegen Sulfatangriff bei Einsatztemperaturen durch die Verwendung eines Olivinrohstoffs, als Hauptkomponente des feuerfesten Erzeugnisses, sowie Magnesiamehl und Siliciumcarbidmehl. Ein die genannten Stoffe enthaltender feuerfester Versatz kann mit einem flüssigen Bindemittel in Form von Kieselsol versetzt sein.

Die Verwendung von Olivinrohstoffen, enthaltend Forsteritgehalte (MgSiO₄) von mindestens 70 Gew.-%, gewährleisten eine hohe Korrosionsbeständigkeit und Infiltrationsbeständigkeit gegen die großen Mengen an fayalitischer Schlacke (FeSiO₄). Kommt eine Fayalit-Schlacke in Kontakt mit dem feuerfesten Material des Gefüges des feuerfesten Erzeugnisses, steigt die Liquidustemperatur der Schlacke. Die Schlacke "friert auf" auf dem feuerfesten Material, wodurch weitere verschleißende Reaktionen nicht ablaufen.

Des Weiteren weist der Olivinrohstoff bzw. der Forsterit im Olivinrohstoff eine schlechte Benetzbarkeit gegen Buntmetallschmelzen, insbesondere Kupferschmelze, und ebenfalls sehr gute Schwefelkorrosionsbeständigkeit auf.

Magnesia kann in den bekannten feuerfesten Erzeugnissen bei starken Korrosionsraten zu Magnesiumsulfat reagieren, was Gefügeschwächungen verursachen kann. Außerdem können Kalzium haltige Silikatnebenphasen, wie Dikalziumsilikat, Mervvinit und Monticellit in der Magnesia das Gefüge schwächen.

Die in der WO 2006/001359 A1 und DE 10 2012 015 026 A1 beschriebenen, feuerfesten Erzeugnisse bzw. Produkte haben sich in überlegener Weise bewährt im Vergleich zu den davor verwendeten Magnesiachromitsteinen.

Bei den beiden feuerfesten Erzeugnissen auf Basis von MgO plus Graphit (WO 2006/001359 A1) oder Olivinrohstoffen mit mindestens 70 Gew.-% Forsteritgehalten (DE 10 2012 015 026 A1) wie auch bei den Magnesiachromitsteinen benetzen jedoch insbesondere die dünnflüssigen Me-Oxide, z. B. die dünnflüssigen Kupferoxide, teilweise aber auch die dünnflüssigen Eisenoxide, insbesondere die dünnflüssigen Me-Fe-Oxide, z. B. die Kupfereisenoxide, des Prozesses das basische Feuerfestmaterial sehr stark. Hieraus resultiert ein hohes Infiltrationspotenzial für diese dünnflüssigen Schmelzen mit der Folge, dass infiltriertes Gefüge geschwächt wird. Das Problem ist zwar bekannt, konnte aber bisher nicht befriedigend gelöst werden.

Aufgabe der Erfindung ist, feuerfeste Erzeugnisse auf Basis von Magnesia-rohstoffen als grobkörnige Hauptkomponente zu schaffen und zu verwenden, die während des Schmelzprozesses wesentlich resistenter sind gegen den Angriff von dünnflüssigen Buntmetalloxiden, insbesondere von dünnflüssigen Kupferoxiden, und/oder dünnflüssigen Buntmetalleisenoxiden, insbesondere dünnflüssigen Kupfereisenoxiden. Dabei sollen die feuerfesten Erzeugnisse bei ihrer Verwendung aber auch die guten Antiwetting-Eigenschaften gegen reine Buntmetallschmelze, insbesondere gegen reine Kupferschmelze, aufweisen, gut der Penetration von fayalitischen Schlacken widerstehen und Beständigkeit gegen Sulfatangriff bei Einsatztemperaturen gewährleisten.

Diese Aufgabe wird gelöst durch die Verwendung eines feuerfesten Auskleidungsprodukts, hergestellt aus einem feuerfesten Versatz, der hauptsächlich einen Basisversatz aufweist aus grobkörnigem Granulat aus mindestens einem eisenarmen Magnesiarohstoff mit hohen MgO-Gehalten von über 90 Gew.-% MgO als Hauptkomponente, sowie hochwertigem und eisenarmem, schwefelbeständigem Magnesiamehl, und mindestens einem während des Schmelzprozesses reduzierend wirkenden, feuerfesten Reaktionsstoff, geeignet für die Reduzierung von geschmolzenen dünnflüssigen Buntmetalloxiden und/oder geschmolzenen dünnflüssigen Buntmetalleisenoxiden in Form von mehlförmigem Kohlenstoff, z. B. in Form von Graphit und/oder Ruß und/oder Koks und/oder Anthrazit. Im Folgenden wird dieser hauptsächlich vorhandene Versatz mit diesen Bestandteilen Basis-Versatz genannt.

Hochwertig soll bedeuten, dass die üblicherweise vorhandenen Nebenphasen wie Dikalziumsilikat, Merwinit, Monticellit usw. mit weniger als 2,5 Gew.-% vorhanden sind. Schwefelbeständig soll bedeuten, dass das MgO-Mehl arm an solchen silikatischen Nebenphasen sein soll, da diese üblicherweise durch Schwefelverbindungen zuerst angegriffen werden. Z.B. sollte der MgO-Gehalt der Magnesia ≥ 97 Gew.-% sein. Der eisenarme Magnesiarohstoff und das eisenarme Magnesiamehl weist weniger als 10 Gew.-% Eisen(III)Oxid auf.

Vorzugsweise kann der Versatz zusätzlich eine feinteilige pulverförmige Kieselsäure aufweisen.

Zusätzlich soll im Rahmen der Erfindung grundsätzlich heißen, dass dem zu 100 Gew.-% zusammengemischten Gemenge aus Magnesiarohstoff, Magnesiamehl und Reaktionsstoff (Basisversatz) ein jeweiliger Zusatzstoff und/oder ein jeweiliges Zusatzmittel in den jeweils angegebenen Mengen addiert zugegeben ist.

Der Versatz kann vorzugsweise zusätzlich auch an sich bekannte Antioxidantien für feuerfeste Erzeugnisse enthalten.

Feinteilig soll vorzugsweise bedeuten, dass die Kieselsäure in Form von Mikrosilika und/oder pyrogener Kieselsäure und/oder gefällter Kieselsäure vorliegt.

Die Erfindung sieht die Verwendung mindestens eines feinteiligen mineralischen, auf die genannten dünnflüssigen Schmelzen reduzierend wirkenden feuerfesten Reaktionsstoffes in Form von mehlförmigem Kohlenstoff im Gefüge eines aus einem erfindungsgemäßen Versatz hergestellten, erfindungsgemäß für Buntmetallschmelzöfen verwendeten feuerfesten Auskleidungsprodukt vor, wobei der Reaktionsstoff die Eigenschaft hat, in situ, d. h. in einem Buntmetallschmelzofen, während des Schmelzprozesses mit dem Gefüge in Kontakt kommende dünnflüssige Buntmetalloxidschmelze und/oder Buntmetalleisenoxidschmelze zu entsprechenden reinen Buntmetallschmelzen zu reduzieren, so dass dann auf die Buntmetallschmelzen die Antiwetting-Eigenschaften der anderen Gefügebestandteile des feuerfesten Auskleidungsprodukts und, im Falle der Verwendung von Graphit, zudem auch die Antiwetting-Eigenschaften des Graphits einwirken können. Daraus resultiert ein hohes Maß an Korrosionsund Infiltrationsbeständigkeit der erfindungsgemäß verwendeten Auskleidungsprodukte.

Als reduzierender Reaktionsstoff wird feinteiliger, mehlförmiger Kohlenstoff, insbesondere in Form von Graphit, vorgesehen. Als alternative oder zusätzliche weitere feinteilige reduzierende Reaktionsstoffe können z. B. Ruß und/oder Anthrazit und/oder Koks verwendet werden.

Die reduzierenden Reaktionsstoffe sind in Mengen zwischen 1 und 20, insbesondere zwischen 5 und 15 Gew.-% im feuerfesten Basisversatz oder im feuerfesten Auskleidungsprodukt bezogen auf die Basisversatzbestandteile enthalten, z. B. mit einer Feinheit unter 1000 µm.

Der reduzierende Reaktionsstoff ist in einem erfindungsgemäß verwendeten Versatz im Gemisch mit den anderen Bestandteilen insbesondere homogen verteilt enthalten. In einem aus einem erfindungsgemäß verwendeten Versatz hergestellten feuerfesten Ausmauerungsprodukt, insbesondere in einem verfestigten geformten Formkörper, z. B. in einem feuerfesten geformten Stein, ist der reduzierende Reaktionsstoff im Gefüge des Körpers auch insbesondere homogen verteilt vorhanden.

Aus einem erfindungsgemäß verwendeten Versatz hergestellte ungeformte feuerfeste Produkte werden z. B. mit Wasser und/oder mindestens einem bekannten Bindemittel für feuerfeste Produkte z. B. einem kohlenstoffhaltigen flüssigen Bindemittel, angemacht und als feuerfeste Auskleidung in einen Buntmetallschmelzofen eingebracht, wobei z. B. eine anschließende Trocknung und/oder Temperung eine Verfestigung der frisch angemachten Masse bewirkt. Die Trocknung oder das Tempern kann aber auch beim Anfahren bzw. Aufheizen des Buntmetallindustrieschmelzofens in situ erfolgen.

Geformte feuerfeste Produkte, wie z. B. Steine, hergestellt aus einem Wasser und/oder mindestens ein bekanntes Bindemittel für feuerfeste Produkte, z. B. ein kohlenstoffhaltiges flüssiges Bindemittel, aufweisenden Versatz, werden in der Regel getrocknet und/oder getempert und anschließend zur Auskleidung eines Buntmetallindustrieschmelzofens verwendet. Man kann die aus dem Versatz hergestellten Produkte aber auch keramisch brennen und anschließend bestimmungsgemäß verwenden.

Ein erfindungsgemäß verwendeter feuerfester Versatz ist hauptsächlich aus dem Basisversatz aus einem Trockenstoffgemisch aus grobkörniger Magnesia, Magnesiamehl und reduzierendem Reaktionsstoff, z. B. Graphit als reduzierenden Reaktionsstoff ausgebildet. Des Weiteren kann ein trockener erfindungsgemäß verwendeter Versatz zweckmäßigerweise zusätzlich bis zu 4, insbesondere bis zu 2,5 Gew.-%, für feuerfeste Produkte üblicherweise verwendete Antioxidantien und/oder andere für feuerfeste Erzeugnisses üblicherweise verwendete Zusatzstoffe und/oder Zusatzmittel enthalten, wobei aber das Mengenverhältnis der Bestandteile MgO grobkörnig, MgO-Mehl und reduzierender Reaktionsstoff, z. B. Graphit, des Basisversatzes erhalten bleiben soll.

Überraschend ist, dass der reduzierende Reaktionsstoff, wie der Graphit und gegebenenfalls auch der aus dem kohlenstoffhaltigen Bindemittel durch Tempern stammende Kohlenstoff oder die anderen genannten Kohlenstoffe bei oxidierenden Bedingungen in situ, d. h. während eines Schmelzbetriebs eines Buntmetallindustrieschmelzofens, durch Oxidation nur unwesentlich verbraucht wird. Dazu tragen - sofern vorhanden - zum einen, wie an sich bekannt, Antioxidantien bei, zum anderen offenbar aber im Wesentlichen auch das Gefügemilieu der Ausmauerung, was aber noch nicht erklärbar ist. Der Kohlenstoff wirkt jedenfalls in überraschender Weise im Gefüge auf benetzende und eindringende dünnflüssige Buntmetalloxidschmelzen und Buntmetalleisenoxidschmelzen des Schmelzprozesses reduzierend, so dass reine Buntmetallschmelze aus den Oxiden erzeugt wird, auf die dann die Antiwetting-Eigenschaft des im Gefüge vorhandenen Kohlenstoffs, insbesondere des Graphits, einwirkt und so ein weiteres Eindringen von dünnflüssiger Oxidschmelze in das Gefüge zumindest behindert wird.

Die Verwendung von hochwertigen Magnesiarohstoffen, enthaltend MgO-Gehalte (MgO) von über 90 Gew.-%, gewährleisten eine hohe Korrosionsbeständigkeit und Infiltrationsbeständigkeit gegen die großen Mengen an fayalitischer Schlacke (FeSiO₄). Kommt eine Fayalit-Schlacke in Kontakt mit dem feuerfesten Material des Gefüges des feuerfesten Erzeugnisses, so kommt es zu Aufnahme von Magnesia aus dem feuerfesten Material (Korrosion), wodurch jedoch der MgO-Gehalt der Schlacke ansteigt, wodurch die Liquidustemperatur der Schlacke ebenfalls ansteigt und das Lösungspotential der Schlacke gegenüber dem feuerfesten Material deutlich sinkt. Die Schlacke "friert auf" auf dem feuerfesten Material, wodurch weitere verschleißende Reaktionen nicht ablaufen.

Insofern wirken die Bestandteile eines erfindungsgemäß verwendeten feuerfesten Produkts hauptsächlich wie folgt:
MgO grobkörnig:
   Durch die hohe Korrosionsbeständigkeit gegenüber Fayalit-Schlacke sowie gegenüber Buntmetall-Eisen-Oxidschmelzen wird ein hoher Widerstand gegen Korrosion gewährleistet. Weiterhin gewährleistet das hochfeuerfeste Magnesiumoxid die hohe Feuerfestigkeit.
MgO-Mehl:
   Wirkungsweise wie MgO grobkörnig. Weiterhin Bildung von Forsterit mit dem Versatz zugesetzten SiO₂ und/oder SiO₂ aus Schlackenbestandteilen; daraus resultierend Verringerung der Porosität und Erwirkung der Forsteriteigenschaften wie Schlackenansteifwirkung und Antiwettingwirkung gegen Buntmetallschmelze
Reduzierender Reaktionsstoff:
   Reduzierung von mit dem Gefüge in Kontakt kommenden dünnflüssigen Buntmetalloxidschmelzen oder Buntmetalleisenoxidschmelzen des Schmelzprozesses
In-situ gebildeter Forsterit:
   Nichtbenetzende Wirkung gegen Buntmetallschmelze und Buntmetalloxidschmelze

Der Magnesiarohstoff (in entsprechenden Qualitäten auf dem Markt erhältlich) wird als - auf dem Sachgebiet sogenanntes - Grobkorngranulat eingesetzt und soll erfindungsgemäß vorzugsweise möglichst 100 Gew.-%, mindestens jedoch über 90 Gew.-% des Minerals Periklas aufweisen. Der Rest können andere bekannte Verunreinigungen des Rohstoffs wie Monticellit und/oder Mervvinit und/oder Belit sein.

Die verwendete Korngröße des Magnesiarohstoffgranulats liegt z. B. zumindest zu 95 Gew.-% im Grobkornbereich zwischen 1 und 8 mm, wobei das Granulat z. B. eine Gaußsche Korngrößenverteilung aufweisen kann oder aus Kornfraktionen mit unregelmäßigen Kornverteilungen ausgebildet sein kann.

Der Magnesiarohstoff wird in Mengen von 30 bis 74, insbesondere von 40 bis 60 Gew.-%, im erfindungsgemäß verwendeten Basisversatzgemisch eingesetzt.

Die feinteilige Magnesia wird in Form eines Mehls bzw. Pulvers mit z. B. nach einer durch Siebung bestimmten Korngrößen von 95 Gew.-% ≤ 1 mm (d₉₅ ≤ 1 mm) verwendet.

Als Magnesia wird z. B. Schmelzmagnesia und/oder Sintermagnesia und/oder synthetische totgebrannte oder kaustische Magnesia eingesetzt.

Die Begriffe "Mehl" und "Pulver" werden im Rahmen der Erfindung als gleiche Begriffe mit gleichem Begriffsinhalt verstanden, so wie sie auch auf dem Sachgebiet bekannt sind. Man versteht darunter trockene lose Kornhaufwerke aus festen Partikeln mit 95 Gew.-% (d₉₅) ≤ 1 mm Partikelgröße.

Der MgO-Gehalt des Magnesiamehls beträgt > 90 Gew.-%, insbesondere > 95 Gew.-%. Der Rest sind übliche Verunreinigungen wie Silikate und/oder Eisenoxid.

Die MgO-Mehle weisen z. B. eine Gaußsche Korngrößenverteilung auf.

Das MgO-Mehl wird im trockenen Basisversatzgemisch in Mengen von 25 bis 50, insbesondere von 35 bis 45 Gew.-%, eingesetzt.

Der Versatz kann zusätzlich auch Siliciumcarbid (SiC) enthalten.

Siliciumcarbid ist auf dem Markt als synthetisches Produkt mit hohem Reinheitsgrad und in verschiedenen Körnungen und Korngrößenverteilungen erhältlich und wird erfindungsgemäß in Pulverform bzw. in Mehlform mit Korngrößen 95 Gew.-% ≤ 1 mm (d₉₅) verwendet. Die Korngrößenverteilung entspricht vorzugsweise einer Gaußschen Kornverteilung.

Das SiC-Pulver wird z. B. mit einer Reinheit von > 90 Gew.-%, insbesondere > 94 Gew.-% an SiC eingesetzt. Die verwendete zusätzliche Zusatzmenge beträgt bis 15, insbesondere bis 10 Gew.-%.

Die zusätzliche feinteilige, trockene Kieselsäure ist z. B. eine Kieselsäure, die mit dem MgO des Magnesiamehls in einem wässrigen Milieu unter Ausbildung von Magnesiumsilikathydratphasen reagiert und z. B. Magnesiumsilikathydratgel und/oder Magnesiumsilikathydratkristallite und/oder Magnesiumsilikathydratkristalle bildet. Der SiO₂-Gehalt der feinteiligen trockenen Kieselsäure liegt vorzugsweise über 90 Gew.-%, insbesondere über 94 Gew.-%. Es hat sich in überraschender Weise ergeben, dass trockene feinteilige Kieselsäure bei Zutritt von Wasser zum erfindungsgemäßen Versatz schneller mit dem MgO der Magnesia MSH-Phasen bildet und schneller erhärtet und höhere Kaltdruckfestigkeiten ergibt.

Die Kieselsäure ist so feinteilig zu wählen, dass in einer Wasser enthaltenden Versatzfrischmasse, die durch Zugabe von Wasser zu einem erfindungsgemäß verwendeten trockenen Versatz und Mischen entsteht, eine Reaktion zwischen dem MgO der Magnesiateilchen und Teilchen der Kieselsäure stattfindet und sich Magnesiumsilikathydratphasen - im Folgenden auch MSH-Phasen genannt - z. B. als Gel und/oder Kristallite und/oder Kristalle bilden, die nach Art einer hydraulischen Abbindung eine Verfestigung der wasserhaltigen Masse bewirken. Vorzugsweise wird dafür der Versatz so zusammengestellt, dass sich im wässrigen Milieu, also nach Zugabe von Wasser zum erfindungsgemäßen Versatz, ein pH-Wert über 7, insbesondere über 10 einstellt.

Dementsprechend eignen sich für die Reaktion zu MSH-Phasen z. B. kristalline Quarzmehle einer Feinheit der Quarzteilchen unter 500, insbesondere unter 200 µm.

Des Weiteren sind für die Erfindung als trockene, feinteilige Kieselsäuren besonders geeignet:
- Silikastaub
   Silikastaub ist ein sehr feines, nicht kristallines amorphes SiO₂-Pulver, das in einem Lichtbogenofen entsteht als Nebenprodukt bei der Herstellung von elementarem Silicium oder von Siliciumlegierungen. Es wird z. B. unter dem Handelsnamen Silikastaub oder Mikrosilica auf dem Markt angeboten und weist i.d.R. über 85 Gew.-% SiO₂ auf. Die Partikelgröße des Silikastaubs - auch Silikarauch genannt - liegt i.d.R. unter 1 mm. Die englische Bezeichnung ist "silica fume".
- Pyrogene Kieselsäure
   Pyrogene Kieselsäuren sind sehr reine amorphe SiO₂-Pulver mit SiO₂-Gehalten z. B. bis 99 Gew.-% und mit i.d.R. Teilchengrößen z. B. zwischen 5 und 50 nm und mit hoher spezifischer Oberfläche z. B. zwischen 50 und 600 m²/g. Diese Kieselsäuren werden durch Flammhydrolyse hergestellt. Pyrogene Kieselsäure wird auf dem Markt z. B. unter dem Handelsnamen Aerosil angeboten. Die englische Bezeichnung ist "fumed silica".
- Gefällte Kieselsäure
   Bei der Herstellung von gefällter Kieselsäure auf nassem Wege geht man von Alkalisilikatlösungen aus, aus denen durch Zusatz von Säure sehr reine amorphe Kieselsäuren ausgefällt werden (86 - 88 Gew.-% SiO₂; 10 - 12 Gew.-% Wasser). Die Teilchengröße liegt zwischen 1 und 200 µm und die spezifische Oberfläche zwischen 10 und 500 m²/g. Gehandelt werden gefällte Kieselsäuren z. B. unter dem Handelsnamen "Sipernat" oder "Ultrasil". Trotz des Wassergehalts sind diese Kieselsäuren nicht flüssig, sondern trocken und pulvrig.

Im Rahmen der Erfindung wird nach einer besonderen Ausführungsform mindestens eine der oben genannten Kieselsäuren verwendet. Zweckmäßigerweise werden die Kieselsäuren bezüglich ihrer Reaktionsfähigkeit mit dem MgO des Magnesiamehls ausgewählt und dafür gesorgt, dass die Kieselsäure möglichst vollständig mit MgO beim Erhärten reagiert.

Die feinteilige trockene Kieselsäure wird dem trockenen Versatzgemisch bis 10, insbesondere von 0,5 bis 6 Gew.-% zugesetzt.

Den zu 100 Gew.-% errechneten erfindungsgemäß verwendeten oben beschriebenen trockenen Basis-Versätzen wird nach einer Ausführungsform erfindungsgemäß vorzugsweise lediglich noch Wasser beigemengt zur Herstellung von erfindungsgemäß verwendeten feuerfesten Produkten.

Im Rahmen der Erfindung werden somit folgende trockene Basis-Versätze in Gew.-% zusammengestellt:

| | |
|---|---|
| Grobkörnige Magnesia: | 30 bis 74, insbesondere 40 bis 60 |
| Magnesiamehl: | 25 bis 50, insbesondere 35 bis 45 |
| Reduzierender Reaktionsstoff in Form von Kohlenstoff, insbesondere Graphit: | 1 bis 20, insbesondere 5 bis 15 |

Diesem Gemisch des Basisversatzes können folgende Bestandteile zusätzlich, vorzugsweise in folgenden Mengen in Gew.-%, zugesetzt werden.

| | |
|---|---|
| feinteilige Kieselsäure: | 0 bis 10, insbesondere 0,5 bis 6 |
| feinteiliges SiC: | 0 bis 15, insbesondere 0 bis 10 |
| Antioxidantien: | 0 bis 4, insbesondere 0,5 bis 2,5 |
| Grobkörniges feuerfestes Werkstoffgranulat: | 0 bis 4, insbesondere 0,1 bis 3,5 |
| feinteiliger feuerfester Werkstoff: | 0 bis 4, insbesondere 0,1 bis 3,5 |
| Zusatzmittel für feuerfeste Erzeugnisse: | 0 bis 2, insbesondere 0,1 bis 1,5 |
| Bindemittel für feuerfeste Erzeugnisse: | 0 bis 10, insbesondere 0,1 bis 6 |

Vorzugsweise ist die Kieselsäure mindestens eine der oben genannten amorphen Kieselsäuren.

Die Mengen der Reaktionspartner MgO-Mehl und SiO₂ in erfindungsgemäß verwendeten Versätzen werden so gewählt, dass bei Wasserzusatz von 1 bis 10, insbesondere von 2,5 bis 6 Gew.-%, bezogen auf die Trockensubstanz des Versatzes, in einem Zeitraum zwischen 6 und 120, insbesondere zwischen 8 und 12 Stunden, im Temperaturbereich von 50 bis 200, insbesondere von 100 bis 150 °C, Kaltdruckfestigkeiten von 40 bis 160, insbesondere von 60 bis 150 MPa gewährleistbar sind.

Bevorzugt wird vorgesehen, dass das reaktionsfähige MgO des Magnesiamehls mengenmäßig überwiegend zur reaktionsfähigen feinteiligen Kieselsäure vorliegt. Daraus soll resultieren, dass sich nach Wasserzugabe MgO-reiche MSH-Phasen bilden, die bei Einwirkung hoher Temperaturen bis z. B. 1350°C Forsterit (2 MgO • SiO₂) bilden können, der den Forsteritanteil erhöht.

Zweckmäßig sind überwiegende Massenverhältnisse MgO zu SiO₂ bis 500:1. Insbesondere liegt das Verhältnis zwischen 1,2:1 und 100:1, vorzugsweise zwischen 1,34:1 und 50:1, ganz besonders vorzugsweise zwischen 1,34:1 und 35:1.

Aus den Trockenversätzen werden erfindungsgemäß verwendete feuerfeste Produkte nach Zusatz von Wasser hergestellt, wobei eine Mischung mit Wassermengen, bezogen auf die Masse des trockenen Versatzes 1 bis 10 Gew.-%, vorzugsweise 2,5 bis 6,0 Gew.-% beträgt.

Wasserhaltige sogenannte Frischmassen z. B. für monolithische Auskleidungen werden erfindungsgemäß mit Wassergehalten z. B. zwischen 1 und 5, insbesondere zwischen 1,5 und 3 Gew.-% mit üblichen Pressverfahren zu geformten Steinrohlingen gepresst. Die geformten Steine lässt man erfindungsgemäß im Temperaturbereich zwischen 15 und 200, vorzugsweise zwischen 50 und 200, insbesondere zwischen 100 und 150 °C aushärten und trocknen, wobei MSH-Phasen gebildet werden. Nach dem Aushärten weisen die Steine relativ hohe Festigkeiten auf und sind handhabbar, so dass daraus eine feuerfeste Auskleidung gemauert werden kann. Erfindungsgemäß weisen die Steine Kaltdruckfestigkeiten z. B. zwischen 40 und 100, insbesondere zwischen 60 und 80 MPa, auf.

Es liegt im Rahmen der Erfindung, die geformten und ggf. getemperten sowie ggf. durch Bildung von MSH-Phasen erhärteten bzw. verfestigten und getrockneten Steine keramisch zu brennen, so dass z. B. aus MSH-Phasen Sinterprodukte, z. B. aus Forsterit entstehen und Sinterbrücken aus z. B. Forsterit zwischen den Olivinkörnern bzw. Olivinteilchen und/oder MgO-Mehlteilchen und/oder ggf. SiO₂-Teilchen bilden. Das keramische Brennen wird vorzugsweise im Temperaturbereich von 400 bis 1400, insbesondere von 600 bis 1200 °C und während einer Zeitdauer von 1 bis 24, insbesondere von 4 bis 12 Stunden durchgeführt, wobei vorteilhaft ist, in reduzierender Atmosphäre zu brennen.

Für das Pressen von Steinen, insbesondere für die Ausbildung von MSH-Phasen, reicht es aus, einem erfindungsgemäß verwendeten Versatz von 1 bis 5, insbesondere von 1,5 bis 3 Gew.-% Wasser zuzusetzen.

Es liegt im Rahmen der Erfindung, an sich bekannte Fließmittel zusätzlich im Versatz vorzusehen oder dem wasserhaltigen Gemenge zuzusetzen, um die Bildsamkeit des Gemenges zu erhöhen. Derartige Fließmittel sind dem Fachmann bekannt. Sie werden i.d.R. in Mengen von 0,01 bis 2, insbesondere von 0,1 bis 1,5 Gew.-% zugesetzt.

Mit höheren Wassergehalten, z. B. von 4 bis 10 Gew.-%, insbesondere von 4 bis 6 Gew.-% werden aus den erfindungsgemäß verwendeten trockenen Versätzen bildsame Gießmassen oder Stampfmassen erzeugt und daraus mittels Formgebung in Formen feuerfeste monolithische vorgeformte Fertigteile hergestellt. Die Verfestigung im Falle von MSH-Phasenbildung erfolgt dabei z. B. bei Raumtemperaturen und die Trocknung mit einer entsprechenden erhöhten Temperaturbehandlung. Die Festigkeitsentwicklung der geformten Masse entspricht dabei der von geformten und getemperten ein Koksgerüst bildenden Steingefügen.

Ein erfindungsgemäß verwendetes Produkt wird zweckmäßig hergestellt, indem aus einem Versatz mit zumindest den Trockenstoffen grobkörnige Magnesia, Magnesiamehl und reduzierendem Reaktionsstoff, z. B. Kohlenstoff in Form von Ruß und/oder Graphit und/oder Anthrazit und/oder Koks, sowie gegebenenfalls Kieselsäure und/oder SiC und/oder Antioxidantien und/oder trockenem, insbesondere pulverförmigem Kunstharz-Bindemittel und/oder Fließmittel, und Wasser und/oder einem flüssigen Bindemittel für feuerfeste Produkte mit geeigneten Mischern ein homogenes Gemenge mit vorgegebener plastischer bzw. bildsamer oder fließfähiger Verarbeitbarkeit erzeugt wird. Diese bildsame oder fließfähige Masse des Gemenges kann vor Ort zur Auskleidung von Schmelzkonvertern verwendet werden. Aus dem Gemenge können - wie bereits beschrieben - aber auch monolithisch geformte Fertigteile oder gepresste Steine erzeugt werden; letztere können ungebrannt oder keramisch gebrannt zur Auskleidung von z. B. Schmelzkonvertern verwendet werden.

Die Erfindung betrifft somit auch die Verwendung eines trockenen Versatzes ausschließlich aus oder z. B. hauptsächlich, d. h. z. B. über 80 Gew.-%, vorzugsweise über 90 Gew.-%, insbesondere über 95 Gew.-% aus Magnesiarohstoffgranulat, MgO-Mehl, feinteiligem Kohlenstoff, insbesondere Graphit, gegebenenfalls einer feinteiligen, trockenen Kieselsäure, insbesondere in Form von Mikrosilika, und/oder gegebenenfalls einem trockenen, z. B. pulverförmigen, z. B. kohlenstoffhaltigen, Bindemittel z. B. einem Kunstharz-Bindemittel für feuerfeste Produkte und/oder SiC und/oder mindestens einem Antioxidans und/oder mindestens einem Zusatzmittel. Der jeweilige Rest kann z. B. mindestens ein anderes feuerfestes grobkörniges Werkstoffgranulat und/oder feuerfester feinteiliger Werkstoff, z. B. Magnesiachromit, Magnesiumspinelle, Spinelle, Chromoxid, Zirkonoxid, Siliciumnitrid, Zirkon und/oder mindestens ein feuerfester, feinteiliger bzw. mehlförmiger Zusatzstoff wie Magnesiachromit, Magnesiumspinelle, Spinelle, Chromoxid, Zirkonoxid, Siliciumnitrid, Zirkon sein.Außerdem kann zweckmäßigerweise mindestens ein an sich bekanntes Zusatzmittel für feuerfeste Versätze, wie Verflüssiger und/oder Abbinderegulator vorhanden sein.

Beispielsweise werden im Rahmen der Erfindung aus einem oben angegebenen wasserhaltigen und/oder bindemittelhaltigen Versatzgemenge durch Pressen gepresste oder ungepresste Formkörper hergestellt und die Formkörper bis auf Restfeuchten vorzugsweise zwischen 0,1 und 2 Gew.-% z. B. durch Trocknung und/oder Tempern gebracht oder die Formkörper werden nach einer weiteren Ausführungsform der Erfindung zusätzlich keramisch in einem keramischen Brennofen gebrannt bei Temperaturen zwischen vorzugsweise 400 und 1400, insbesondere zwischen 600 und 1200 °C, vorzugsweise in reduzierender Atmosphäre für eine Zeitdauer vorzugsweise zwischen 1 und 24, insbesondere zwischen 4 und 12 Stunden. Die Brennbedingungen werden dabei erfindungsgemäß so gewählt, dass die Bestandteile Magnesiarohstoff, MgO-Mehl und reduzierender Reaktionsstoff, z. B. Graphit, während des Brennens möglichst nicht oder nur zu einem geringen Anteil miteinander reagieren, damit diese Bestandteile im Gefüge in situ im Schmelzaggregat, z. B. im Konverter, beim Angriff einer Schmelze und/oder Schlacke für die erfindungsgemäße Gewährleistung der Feuerfestigkeit, insbesondere die Antiwettingwirkung für die Buntmetallschmelze und chemisch-physikalische Ansteifwirkung gegen Schlackenschmelze sowie die reduzierende Wirkung des reduzierenden Reaktionsstoffes zur Verfügung stehen.

Mit den ungebrannten und gebrannten erfindungsgemäß verwendeten Formkörpern können Auskleidungen von Buntmetallschmelzkonvertern erstellt werden, die den bisherigen Auskleidungen bezüglich Infiltrations- und Korrosionswiderstand gegen Buntmetallschmelzen und flüssige Schlacken der Buntmetallverhüttung überlegen sind. Insbesondere zeigt sich die Überlegenheit der erfindungsgemäß verwendeten feuerfesten Erzeugnisse in Kupferschmelzkonvertern, z. B. in einem Pierce-Smith-Konverter (PS-Konverter).

Die ungebrannten gepressten getrockneten Formkörper weisen z. B. die folgenden Eigenschaften auf:

| | |
|---|---|
| Rohdichte: | 2,65 bis 3,15 kg/m³ |
| Kaltdruckfestigkeit: | 40 bis 100, insbesondere 60 bis 85 MPa |

Die gebrannten erfindungsgemäß verwendeten Formkörper weisen z. B. die folgenden Eigenschaften auf:

| | |
|---|---|
| Rohdichte: | 2,55 bis 3,15 kg/m³, |
| Kaltdruckfestigkeit: | 30 bis 80, insbesondere 40 bis 70 MPa. |

Die erfindungsgemäß verwendeten Fertigteile, das sind geformte Teile, insbesondere geformte und gepresste Steine, weisen z. B. die folgenden Eigenschaften auf:

| | |
|---|---|
| Rohdichte: | 2,55 bis 3,15 kg/m³, |
| Kaltdruckfestigkeit: | 30 bis 180, insbesondere 50 bis 150 MPa. |

Die erfindungsgemäß verwendeten Erzeugnisse eignen sich zwar speziell für den Einsatz in PS-Konvertern für die Kupfererzeugung, sind aber auch mit Vorteilen gegenüber den üblichen feuerfesten Erzeugnissen in anderen Anwendungen, bei denen fayalitische Schlacken und dünnflüssige Buntmetalloxidschmelzen auftreten wie das praktisch in der gesamten Buntmetallindustrie der Fall ist, mit den beschriebenen Vorteilen verwendbar.

Das erfindungsgemäße Konzept beruht darauf, dass basierend auf Magnesiagrobkorn als Stützkorn und einem relativ hohen Anteil an MgO-Feinkorn bzw. Mehlkorn sich das Gleichgewicht im Stein zwischen den Reaktionsstoffen aus dem Stein und der Schlacke erst bei Schmelzprozesstemperaturen über 1000°C, z. B. zwischen 1200 und 1350°C einstellt. Bei diesen Temperaturen ist Graphit trotz oxidierender Schmelzprozessbedingungen auch noch bezüglich Antiwettingwirkung gegen die bereits beschriebenen schmelzflüssigen Medien wirksam. MgO reagiert mit SiO₂ zu weiterem Forsterit, wobei das Porenvolumen des Gefüges verringert wird. MgO wird vorzugsweise im stöchiometrischen Überschuss zu für eine Reaktion verfügbarem SiO₂ gewählt, um die Bildung von Enstatit, das nicht feuerfest ist, zu vermeiden. Diese Reaktion in situ während des Schmelzprozesses versiegelt den Stein unmittelbar feuerseitig weitgehend und behindert die Penetration durch die sehr dünnflüssige Metallschmelze, z. B. Kupferschmelze. In Kontakt mit der allgegenwärtigen Fayalitschlackenschmelze (Schmelztemperatur 1210 °C) reagiert außerdem das MgO zusammen mit dem Forsterit (Schmelztemperatur 1890 °C) zu Olivin-Mischkristallen. Die Liquidus-Temperatur der Mischkristallschmelze steigt dadurch an, d. h. das Reaktionsprodukt Schlacke-Produktgefüge friert auf, d. h. führt zu einem Ansteifen der Reaktionsproduktschmelze und die Korrosionsreaktion bzw. Infiltration wird entsprechend gestoppt oder zumindest jedoch stark reduziert.

Nach der Erfindung lässt man somit gepresste, zumindest Magnesiarohstoff, MgO und ggf. feinteilige Kieselsäure sowie reduzierenden Reaktionsstoff, z. B. Graphit enthaltende Formkörper, die z. B. einen Wassergehalt zwischen 1 und 5, insbesondere zwischen 1,5 und 3 Gew.-% aufweisen, erhärten, wobei sich ggf. MSH-Phasen bilden, die die Erhärtung bewirken. Die Erhärtungszeit ist temperaturabhängig. Man lässt die gepressten Formkörper zweckmäßigerweise 6 bis 120, insbesondere 24 bis 96 Stunden erhärten und trocknen im Temperaturbereich zwischen 50 und 200, insbesondere zwischen 100 und 150 °C bis zu Restfeuchten zwischen 0,1 und 4,5, insbesondere zwischen 0,1 und 2,5 Gew.-% Wassergehalt in einem geeigneten Trocknungsaggregat. Es werden dabei Kaltdruckfestigkeiten zwischen 40 und 100, insbesondere zwischen 60 und 85 MPa erzielt.

Die erfindungsgemäß herstellbaren nicht gepressten, in Formen gegossenen und ggf. vibrierten Frischmassen für monolithische Fertigbauteile aus den oben genannten Bestandteilen weisen Wassergehalte zwischen 4 und 10, insbesondere zwischen 4 und 6 Gew.-% auf. Sie werden in Formen eingebracht und ggf. vibriert. Man lässt sie z. B. an der Luft zwischen 15 und 35 °C erhärten und im oben für die gepressten Formkörper angegebenen Temperaturbereich trocknen bis auf Restfeuchten wie bei den gepressten Formkörpern. Dabei erzielt man Kaltdruckfestigkeiten zwischen 30 und 180, insbesondere zwischen 50 und 150 MPa.

Nach einer weiteren Ausführungsform der Erfindung wird anstelle von Wasser oder vorzugsweise in Kombination damit, z. B. für die MSH-Phasenbildung, mindestens ein an sich bekanntes wasserhaltiges Bindemittel für feuerfeste Erzeugnisse aus der folgenden Gruppe Ligninsulfonat, Magnesiumsulfat, Ethylsilikat und Melasse oder weitere Zuckerarten verwendet in einer Menge berechnet auf die Trockensubstanz eines Versatzes von z. B. 2 bis 5 Gew.-% für gepresste Erzeugnisse und von z. B. 4 bis 10 Gew.-% für Fertigbauteile und Gießmassen. Der Wasseranteil dieser Bindemittel trägt dabei zur oben beschriebenen MSH-Phasenbildung bei.

Des Weiteren wird im Rahmen einer Ausführungsform der Erfindung in erfindungsgemäß verwendeten Versätzen oder in erfindungsgemäß verwendeten Produkten ein an sich bekanntes Bindemittel für feuerfeste Erzeugnisse aus der Gruppe Pech und/oder Teer und insbesondere der bekannten Kunstharze wie Phenol-Formaldehydharze verwendet werden jeweils in Mengen von z. B. 2 bis 5 Gew.-% berechnet auf die Trockensubstanz.

Die erfindungsgemäß verwendeten Erzeugnisse eignen sich speziell für den Einsatz in PS-Konvertern für die Kupfererzeugung, sind aber auch mit gleichen Vorteilen im Vergleich zu den üblichen feuerfesten Erzeugnissen in anderen Anwendungen, bei denen fayalitische Schlacken und dünnflüssige Buntmetallschmelzen auftreten, wie das in den Buntmetallschmelzprozessen der Fall ist, mit den beschriebenen Vorteilen verwendbar.

Aus den Versätzen hergestellte Steine müssen nicht unbedingt gebrannt, sondern es reicht in der Regel aus, dass sie getrocknet, ggf. und/oder getempert werden, so dass sie handhabbar und für Auskleidungsmauerwerk einsetzbar sind.

## Patentansprüche

1. Verwendung eines geformten oder ungeformten feuerfesten Auskleidungsproduktes für die Erstellung einer feuerseitigen Auskleidung eines Buntmetallindustrieschmelzofens, wobei das Auskleidungsprodukt hergestellt ist aus einem feuerfesten, trockenen, mineralischen Versatz aus feuerfesten mineralischen Werkstoffen, werkstoffmäßig derart zusammengestellt, dass daraus feuerfeste, gegen fayalitische Schlacken, sulfidische Schmelzen (Matten), Sulfate und Buntmetallschmelzen langfristig beständige Produkte für eine feuerseitige Auskleidung von Buntmetallindustrieschmelzöfen erstellt werden können, und hauptsächlich aufweisend einen Basisversatz aus folgenden, zu 100 Gew.-% zusammengemischten Basisversatzbestandteilen:
- 30 bis 74 Gew.-% mindestens eines eisenarmen, also weniger als 10 Gew.-% Eisen(III)Oxid aufweisenden, grobkörnigen Magnesiarohstoffs mit über 90 Gew.-%, insbesondere mit über 95 Gew.-%, MgO und mit einer Kornverteilung mit zumindest 95 Gew.-% ≥ 1,0 mm als Hauptkomponente
- 25 bis 50 Gew.-% eisenarmes, also weniger als 10 Gew.-% Eisen(III)Oxid aufweisendes, schwefelbeständiges Magnesiamehl (MgO-Mehl) mit weniger als 2,5 Gew.-% silikatischen Nebenphasen und mit > 90 Gew.-%, insbesondere mit > 95 Gew.- %, MgO und mit Korngrößen mit d₉₅ ≤ 1 mm
- 1 bis 20 Gew.-% mindestens eines feuerfesten, während des Schmelzprozesses in situ auf Buntmetalloxidschmelzen und/oder Buntmetalleisenoxidschmelzen reduzierend und zu Buntmetallschmelzen konvertierend wirkenden Reaktionsstoffs in Form von mehlförmigem Kohlenstoff mit einer Kornverteilung mit d₉₅ ≤ 1 mm.

2. Verwendung nach Anspruch 1,
**dadurch gekennzeichnet, dass**
der mehlförmige Kohlenstoff Graphit und/oder Ruß und/oder Anthrazit und/oder Koks ist.

3. Verwendung nach Anspruch 1 und/oder 2,
**dadurch gekennzeichnet dass**
der Basisversatz folgende Zusammensetzungen aufweist:
- 40 bis 60 Gew.-% grobkörniger Magnesiarohstoff,
- 35 bis 45 Gew.-% Magnesiamehl,
- 5 bis 15 Gew.-% mehlförmiger Kohlenstoff.

4. Verwendung nach einem oder mehreren der vorhergehenden Ansprüche,
**dadurch gekennzeichnet, dass**
die Korngröße des grobkörnigen Magnesiarohstoffs zumindest zu 95 Gew.- % zwischen 1 und 8 mm liegt.

5. Verwendung nach einem oder mehreren der vorhergehenden Ansprüche,
**dadurch gekennzeichnet, dass**
der Basisversatz den Kohlenstoff in Mengen zwischen 1 und 20 Gew.-%, insbesondere zwischen 5 und 15 Gew.-%, und mit einer Feinheit unter 1000 µm aufweist.

6. Verwendung nach einem oder mehreren der vorhergehenden Ansprüche,
**dadurch gekennzeichnet, dass**
der Versatz aus dem Basisversatz besteht.

7. Verwendung nach der Ansprüche 1 bis 5,
**dadurch gekennzeichnet, dass**
zusätzlich der Versatz SiC, vorzugsweise in Mengen bis 15, insbesondere bis 10 Gew.-%, enthält.

8. Verwendung nach einem der Ansprüche 1 bis 5 oder 7,
**dadurch gekennzeichnet, dass**
zusätzlich der Versatz mindestens eine feinteilige, bei Wasserzugabe zum Versatz mit dem MgO-Mehl zu Magnesiumsilikathydratphasen reagierende Kieselsäure, vorzugsweise in Mengen bis 8, insbesondere bis 5 Gew.-%, enthält.

9. Verwendung nach einem der Ansprüche 1 bis 5, 7 oder 8,
**dadurch gekennzeichnet, dass**
zusätzlich der Versatz mindestens ein Bindemittel für feuerfeste Produkte in trockener, feinteiliger Form, vorzugsweise in Mengen bis 10, insbesondere 0,1 bis 6 Gew.-% enthält.

10. Verwendung nach der Ansprüche 1 bis 5,
**dadurch gekennzeichnet, dass**
der Versatz aus dem Basisversatz und zusätzlich zu dem Basisversatz aus folgenden Bestandteilen in folgenden Mengen in Gew.-% besteht:
| | | |
|---|---|---|
| - | mehlförmiger Kieselsäure mit einer Kornverteilung mit d₉₅ ≤ 1 mm: | 0 bis 10, insbesondere 0,5 bis 6 |
| - | mehlförmigem SiC mit einer Kornverteilung mit d₉₅ ≤ 1 mm: | 0 bis 15, insbesondere 0 bis 10 |
| - | Antioxidantien: | 0 bis 4, insbesondere 0,5 bis 2,5 |
| - | grobkörnigem feuerfestem Werkstoffgranulat mit einer Kornverteilung mit zumindest 95 Gew.-% ≥ 1,0 mm: | 0 bis 4, insbesondere 0,1 bis 3,5 |
| - | feuerfestem mehlförmigem Werkstoff mit einer Kornverteilung mit d₉₅ ≤ 1 mm: | 0 bis 4, insbesondere 0,1 bis 3,5 |
| - | Zusatzmittel für feuerfeste Erzeugnisse: | 0 bis 2, insbesondere 0,1 bis 1,5 |
| - | Bindemittel für feuerfeste Erzeugnisse: | 0 bis 10, insbesondere 0,1 bis 6. |

11. Verwendung nach Anspruch 9 oder 10,
**dadurch gekennzeichnet, dass**
das Bindemittel ein kohlenstoffhaltiges Bindemittel, insbesondere Teer und/oder Pech, vorzugsweise aber ein Kunstharzbindemittel ist.

12. Verwendung nach einem der Ansprüche 8 bis 11,
**dadurch gekennzeichnet, dass**
es sich bei der trockenen, mehlförmigen Kieselsäure um mindestens eine der folgenden Kieselsäuren handelt:
- Silikastaub mit einer Partikelgröße unter 1 mm
- Pyrogene Kieselsäure mit Teilchengrößen zwischen 5 und 50 nm
- Gefällte Kieselsäure mit einer Teilchengröße zwischen 1 und 200 µm und einer spezifischen Oberfläche zwischen 10 und 500 m²/g.

13. Verwendung nach einem der vorhergehenden Ansprüche,
**dadurch gekennzeichnet, dass**
das Auskleidungsprodukt ein geformter feuerfester Stein ist, hergestellt durch Mischen des Versatzes mit Wasser und/oder einem flüssigen Bindemittel für feuerfeste Produkte zu einer formbaren Frischmasse und Pressen der Frischmasse und vorzugsweise Trocknung und/oder Temperung des Steins.

14. Verwendung nach Anspruch 13,
**dadurch gekennzeichnet, dass**
der Stein mindestens eine aus dem Bindemittel für feuerfeste Produkte erhärtete, die Versatzkörner fest verbindende Bindemittelphase aufweist.

15. Verwendung nach Anspruch 13 und/oder 14,
**dadurch gekennzeichnet, dass**
der Stein keramisch gebrannt ist und Sinterbrücken zwischen Versatzkörnern aufweist.

16. Verwendung nach einem oder mehreren der Ansprüche 13 bis 15,
**dadurch gekennzeichnet, dass**
die Bindemittelphase ein Koksgerüst aufweist.

17. Verwendung nach einem der Ansprüche 13, 14 oder 16,
**dadurch gekennzeichnet, dass**
die Bindemittelphase Magnesiumsilikathydrat aufweist.

18. Verwendung nach einem der Ansprüche 13 bis 17,
**dadurch gekennzeichnet, dass**
der Stein zur Erstellung eines feuerseitigen feuerfesten Mauerwerks verwendet wird.

19. Verwendung nach einem der Ansprüche 1 bis 12,
**dadurch gekennzeichnet, dass**
das ungeformte Auskleidungsprodukt zur Erstellung einer monolithischen feuerseitigen feuerfesten Auskleidung verwendet wird, wobei das Auskleidungsprodukt hergestellt ist durch Mischen des Versatzes mit Wasser und/oder einem flüssigen Bindemittel für feuerfeste Produkte zu einer formbaren Frischmasse und wobei die Innenwandung des Buntmetallindustrieschmelzofens mit der Frischmasse feuerseitig ausgekleidet wird, wobei die Auskleidung vorzugsweise getrocknet und/oder getempert wird.

## Claims

1. Use of a shaped or unshaped refractory lining product for making of a fire-side lining of an industrial non-ferrous metal smelting furnace, wherein the lining product is produced from a refractory, dry, mineral batch of refractory mineral materials, composed, in terms of materials, in such a manner that refractory products for fire-side lining of industrial non-ferrous metal smelting furnaces that are resistant to fayalite slags, sulfidic melts (mattes), sulfates, and non-ferrous metal melts, over the long term, can be produced from them, and mainly having a basic batch consisting of the following basic batch components, which are mixed to come to 100 wt.-%:
- 30 to 74 wt.-% of at least one low-iron, that means having less than 10 wt.- % iron (III) oxide, coarse-grained magnesia raw material with more than 90 wt.-%, preferably with more than 95 wt.-% MgO, and having a grain size distribution with at least 95 wt.-% ≥ 1.0 mm as a main component
- 25 to 50 wt.-% of low-iron, that means having less than 10 wt.-% iron (III) oxide, sulfur resistant magnesia meal (MgO meal) with less than 2.5 wt.-% of silicate secondary phases and with > 90 wt.-%, preferably with > 95 wt.- % MgO, and with grain sizes of d₉₅ ≤ 1 mm,
- 1 to 20 wt.-% of at least one refractory reagent that acts to reduce non-ferrous metal oxide melts and/or non-ferrous metal iron oxide melts during the smelting process (in situ) and to convert them to non-ferrous metal melts, in the form of mealy carbon with a grain distribution with d₉₅ ≤ 1 mm.

2. Use according to claim 1,
**characterized in that**
the mealy carbon is graphite and/or carbon black and/or anthracite and/or coke.

3. Use according to claim 1 and/or 2,
**characterized in that**
the basic batch comprises the following compositions:
- 40 to 60 wt.-% coarse-grained magnesia,
- 35 to 45 wt.-% magnesia meal,
- 5 to 15 wt.-% mealy carbon.

4. Use according to one or more of the preceding claims,
**characterized in that**
the grain size of the coarse-grained magnesia raw material lies by at least 95 wt.- % between 1 and 8 mm.

5. Use according to one or more of the preceding claims,
**characterized in that**
the basic batch comprises the carbon in amounts between 1 to 20 wt.-%, in particular between 5 to 15 wt.-%, and with a fineness below 1000 µm.

6. Use according to one or more of the preceding claims,
**characterized in that**
the batch consists of the basic batch.

7. Use according to one of claims 1 to 5,
**characterized in that**
in addition, the batch contains SiC, preferably in amounts up to 15, particularly up to 10 wt.-%.

8. Use according to one of claims 1 to 5 or 7,
**characterized in that**
in addition, the batch contains at least one fine-particle silicic acid that reacts with the MgO meal, when water is added to the batch, to form magnesium silicate hydrate phases, preferably in amounts up to 8, particularly up to 5 wt.-%.

9. Use according to one of claims 1 to 5, 7 or 8,
**characterized in that**
in addition, the batch contains at least one known binder for refractory products, in dry, fine-particle form, preferably in amounts up to 10, particularly 0.1 to 6 wt.-%.

10. Use according to one of claims 1 to 5,
**characterized in that**
the batch consists of the basic batch and in addition to the basic batch of one of the following components in the following amounts in wt.-%:
| | | |
|---|---|---|
| - | mealy silicic acid with a grain distribution with d₉₅ ≤ 1 mm: | 0 bis 10, preferably 0,5 bis 6 |
| - | mealy SiC with a grain distribution with d₉₅ ≤ 1 mm: | 0 bis 15, preferably 0 bis 10 |
| - | Antioxidants: | 0 bis 4, preferably 0,5 bis 2,5 |
| - | coarse-grained refractory material granulate with a grain distribution with at least 95 wt.-% ≥ 1,0 mm: | 0 bis 4, preferably 0,1 bis 3,5 |
| - | refractory mealy material with a grain distribution with d₉₅ ≤ 1 mm: | 0 bis 4, preferably 0,1 bis 3,5 |
| - | Additive for refractory products: | 0 bis 2, preferably 0,1 bis 1,5 |
| - | binder for refractory products: | 0 bis 10, preferably 0,1 bis 6. |

11. Use according to claim 9 or 10,
**characterized in that**
the binder is a binder that contains carbon,
particularly tar and/or pitch, but preferably a synthetic resin binder.

12. Use according to one of claims 8 to 11,
**characterized in that**
the dry, mealy silicic acid is at least one of the following silicic acids:
- Silica fume having a particle size below 1 mm
- Pyrogenic silicic acid having particle sizes between 5 and 50 nm
- Precipitated silicic acid having a particle size between 1 and 200 µm and a specific surface area between 10 and 500 m²/g.

13. Use according to one of the preceding claims,
**characterized in that**
the lining product is a molded refractory brick, produced by means of mixing the batch with water and/or a liquid binder for refractory products, to form a moldable fresh mass, and pressing the fresh mass and preferably drying and/or tempering the brick.

14. Use according to claim 13,
**characterized in that**
the brick has at least one binder phase that has hardened from the binder for refractory products and firmly connects the batch grains.

15. Use according to claim 13 and/or 14,
**characterized in that**
the brick is ceramically fired and has sintering bridges between batch grains.

16. Use according to one or more of claims 13 to 15,
**characterized in that**
the binder phase has a coke structure.

17. Use according to one of claims 13, 14 or 16,
**characterized in that**
the binder phase contains magnesium silicate hydrate.

18. Use according to one of claims 13 to 17,
**characterized in that**
the brick is used for making a fire-side refractory masonry.

19. Use according to one of claims 1 to 12,
**characterized in that**
the unshaped lining product is used for making a monolithic fire-side refractory lining, wherein the lining product is produced by means of mixing the batch with water and/or a liquid binder for refractory products, to form a moldable fresh mass, and wherein the inner wall of the industrial non-ferrous metal smelting furnace is lined with the fresh mass on the fire side, wherein the lining is preferably dried and/or tempered.

## Revendications

1. Utilisation d'un produit de revêtement réfractaire moulé ou non moulé pour la fabrication d'un revêtement côté feu d'un four industriel de fusion de métaux non ferreux, le produit de revêtement étant fabriqué à partir d'un mélange minéral sec réfractaire de matériaux minéraux réfractaires, composé de telle sorte qu'à partir de ceux-ci peuvent être fabriqués des produits résistant durablement aux scories fayalitiques, aux masses fondues sulfurées (mattes), aux sulfates et aux masses fondues de métaux ferreux pour un revêtement côté feu de fours industriels de fusion de métaux non ferreux, et comportant principalement un mélange de base constitué des composants de mélange de base suivants, mélangés à 100% en poids :
- 30 à 74% en poids d'au moins une matière première de magnésie à gros grains, pauvre en fer, comportant ainsi moins de 10% en poids d'oxyde de fer (III), dotée de plus de 90% en poids, en particulier de plus de 95% en poids, de MgO et dotée d'une répartition de grains d'au moins 95% en poids ≥ 1,0 mm en tant que composant principal
- 25 à 50% en poids de farine de magnésie (farine de MgO) pauvre en fer, comportant ainsi moins de 10% en poids d'oxyde de fer (III), résistante au soufre, dotée de moins de 2,5% en poids de phases secondaires silicatées et avec > 90 % en poids, en particulier avec > 95% en poids, de MgO et dotée d'une répartition de grains avec d₉₅ ≤ 1 mm
- 1 à 20% en poids d'au moins une substance de réaction réfractaire, agissant in situ pendant le processus de fusion en réduisant des masses fondues d'oxydes de métaux non ferreux et/ou des masses fondues d'oxyde de fer et de métaux non ferreux et en les convertissant en masses fondues de métaux non ferreux, sous forme de carbone sous forme de farine dotée d'une répartition de grains avec d₉₅ ≤ 1 mm.

2. Utilisation selon la revendication 1,
**caractérisée en ce que**
le carbone sous forme de farine est du graphite et/ou de la suie et/ou de l'anthracite et/ ou du coke.

3. Utilisation selon la revendication 1 et/ou 2,
**caractérisée en ce que**
le mélange de base comporte les compositions suivantes :
- 40 à 60% en poids de matière première de magnésie à gros grains,
- 30 à 45% en poids de farine de magnésie,
- 5 à 15% de carbone sous forme de farine.

4. Utilisation selon l'une ou plusieurs des revendications précédentes,
**caractérisée en ce que**
la taille de grain de la matière première de magnésie à gros grains au moins à 95% en poids se trouve entre 1 et 8 mm.

5. Utilisation selon l'une ou plusieurs des revendications précédentes,
**caractérisée en ce que**
le mélange de base comporte du carbone en quantité comprise entre 1 et 20% en poids, en particulier entre 5 et 15% en poids, et doté d'une finesse au-dessous de 1000 µm.

6. Utilisation selon l'une ou plusieurs des revendications précédentes,
**caractérisée en ce que**
le mélange se compose du mélange de base.

7. Utilisation selon les revendications 1 à 5,
**caractérisée en ce que**
le mélange contient en outre du SiC, de préférence en quantité jusqu'à 15% en poids, en particulier jusqu'à 10% en poids.

8. Utilisation selon les revendications 1 à 5 ou 7,
**caractérisée en ce que**
le mélange contient en outre au moins de l'acide silicique finement divisé réagissant lors d'ajout d'eau avec un mélange de farine de MgO en phases de silicate de magnésium hydraté, de préférence en quantité jusqu'à 8% en poids, en particulier jusqu'à 5% en poids.

9. Utilisation selon les revendications 1 à 5, 7 ou 8,
**caractérisée en ce que**
le mélange contient en outre au moins un liant pour le produit réfractaire sous forme sèche et finement divisée, de préférence en quantité jusqu'à 10% en poids, en particulier de 0,1 à 6% en poids.

10. Utilisation selon les revendications 1 à 5,
**caractérisée en ce que**
le mélange se compose du mélange de base et, en plus du mélange de base, des composants suivants dans les quantités suivantes en % en poids :
| | |
|---|---|
| - acide silicique sous forme de farine doté d'une répartition de grains avec d₉₅ ≤ 1 mm : | 0 à 10, en particulier 0,5 à 6 |
| - SiC sous forme de farine doté d'une répartition de grains avec d₉₅ ≤ 1 mm : | 0 à 15, en particulier 0 à 10 |
| - antioxydants : | 0 à 4, en particulier 0,5 à 2,5 |
| - granulat de matériau réfractaire à gros grains doté d'une répartition de grains avec au moins 95% en poids ≥ 1,0 mm : | 0 à 4, en particulier 0,1 à 3,5 |
| - matériau réfractaire sous forme de farine doté d'une répartition de grains avec d₉₅ ≤ 1 mm : | 0 à 4, en particulier 0,1 à 3,5 |
| - additif pour produits réfractaires : | 0 à 2, en particulier 0,1 à 1,5 |
| - liant pour produits réfractaires : | 0 à 10, en particulier 0,1 à 6. |

11. Utilisation selon la revendication 9 ou 10,
**caractérisée en ce que**
le liant est un liant carboné, en particulier du goudron et/ou du brai, mais de préférence un liant durcissant en résine synthétique.

12. Utilisation selon l'une des revendications 8 à 11,
**caractérisée en ce que**
l'acide silicique sec sous forme de farine se compose d'au moins un des acides siliciques suivantes :
- poussière de silice dotée d'une taille de particules inférieure à 1 mm
- acide silicique pyrogène doté d'une taille de particules comprise entre 5 et 50 nm
- acide silicique précipité doté d'une taille de particules comprise entre 1 et 200 µm et d'une surface spécifique comprise entre 10 et 500m²/g.

13. Utilisation selon l'une des revendications précédentes,
**caractérisée en ce que**
le produit de revêtement est une brique réfractaire moulée, fabriquée par mélange du mélange avec de l'eau et/ou un liant liquide pour produits réfractaires en une masse fraîche moulable et par pressage de la masse fraîche et de préférence par séchage et/ou traitement thermique de la brique.

14. Utilisation selon la revendication 13,
**caractérisée en ce que**
la brique comporte au moins une phase de liant durcie à partir du liant pour produits réfractaires, liant solidement les grains de mélange.

15. Utilisation selon la revendication 13 et/ou 14,
**caractérisée en ce que**
la brique est cuite en céramique et comporte des ponts de frittage entre les grains de mélange.

16. Utilisation selon l'une ou plusieurs des revendications 13 à 15,
**caractérisée en ce que**
la phase de liant comporte un squelette de coke.

17. Utilisation selon l'une des revendications 13, 14 ou 16,
**caractérisée en ce que**
la phase de liant comporte du silicate de magnésium hydraté.

18. Utilisation selon l'une des revendications 13 à 17,
**caractérisée en ce que**
la brique est utilisée pour la fabrication d'une maçonnerie réfractaire côté feu.

19. Utilisation selon l'une des revendications 1 à 12,
**caractérisée en ce que**
le produit de revêtement non moulé est utilisé pour la fabrication d'un revêtement réfractaire monolithique côté feu, le produit de revêtement étant fabriqué par mélange du mélange avec de l'eau et/ou un liant liquide pour produits réfractaires en une masse fraîche moulable, et la paroi interne du four industriel de fusion de matériaux non ferreux étant revêtue côté feu avec la masse fraîche, le revêtement étant de préférence séché et/ou traité thermiquement.
